(19) Europäisches Patentamt
European Patent Office
Office européen des brevets

(11) Veröffentlichungsnummer: **0 513 655 A2**

(12) **EUROPÄISCHE PATENTANMELDUNG**

(21) Anmeldenummer: **92107667.5**

(22) Anmeldetag: **06.05.92**

(51) Int. Cl.5: **C08L 71/10**, C08L 67/00, C08L 77/12

(30) Priorität: **13.05.91 DE 4115566**

(43) Veröffentlichungstag der Anmeldung: **19.11.92 Patentblatt 92/47**

(84) Benannte Vertragsstaaten: **BE CH DE FR GB IT LI NL SE**

(71) Anmelder: **HOECHST AKTIENGESELLSCHAFT**
**Postfach 80 03 20**
**W-6230 Frankfurt am Main 80(DE)**

(72) Erfinder: **Falk, Uwe, Dr.**
**Am Taubertsberg 4**
**W-6500 Mainz(DE)**
Erfinder: **Hermann-Schönherr, Otto, Dr.**
**Grafenstrasse 15**
**W-6140 Bensheim(DE)**

(54) **Legierungen aus amorphen Polyaryletherketonen und flüssigkristallinen Polyestern.**

(57) Polymerlegierungen enthaftend (A) 98-2 Gew.-% mindestens eines amorphen Polyaryletherketons mit einer inhärenten Viskosität von 0,2 bis 2,5 dl/g und (B) 2-98 Gew.-% mindestens eines vollaromatischen flüssigkristallinen Polyesters werden hergestellt. Sie können als Matrixmaterial für Verbundwerkstoffe oder zur Herstellung von Formkörpern verwendet werden.

EP 0 513 655 A2

Im Laufe der letzten Jahre wurde eine neue Klasse von Polyarylethern, die der Polyaryletherketone, bekannt, deren Synthese zum Beispiel durch nukleophile aromatische Substitution erfolgt.

Bei Polyaryletherketonen handelt es sich um eine wertvolle Polymerklasse, die sich u.a. durch hohe thermische Resistenz, hydrolytische Stabilität und gute Lösemittelresistenz auszeichnet. Polyaryletherketone können mit unterschiedlichen Schmelztemperaturen und Molekulargewichten synthetisiert werden, wobei einige Polyaryletherketone eine hohe Kristallinität und Schmelztemperaturen von weit über 300 °C aufweisen.

Amorphe Polyaryletherketone zeichnen sich insbesondere durch hohe hydrolytische Stabilität und geringe Wasseraufnahme (DE-A-3915734) aus, besitzen jedoch für einige Anwendungen, beispielsweise als Matrixmaterialien für Composites nur unzureichende mechanische Eigenschaften.

Es ist bekannt, daß technologisch wichtige Eigenschaften von Polymeren, wie die oben genannten, eingestellt werden können, indem man Polymere mit anderen Polymeren legiert. Man ist bis heute jedoch weit davon entfernt, die Eigenschaften einer Legierung aus den Eigenschaften der Einzelkomponenten gesichert vorhersagen zu können. Daher bleibt das Legieren von Polymeren weitgehend empirisch.

Aus EP-A-278066 sind Legierungen aus Polyetherimiden vom Typ der amorphen Hochtemperaturthermoplasten und flüssigkristallinen Polyestern bekannt. Von Nachteil ist deren relativ hohe Wasseraufnahme, die zu einem Verlust der Dimensionsstabilität fuhrt und dadurch die Einsatzmöglichkeiten einschränkt.

Ferner sind aus WO-A-90/13421 Legierungen aus vollaromatischen, flüssigkristallinen Polyestern und teilkristallinen Hochtemperaturthermoplasten, bevorzugt Polyetheretherketonen, mit einem Schmelzpunkt von mindestens 200 °C, bekannt. Für manche Anwendungen dieser Legierungen, deren Hauptbestandteil der flüssigkristalline Polyester ist, sind deren mechanische Eigenschaften wie die Reißdehnung weiterhin verbesserungsbedürftig.

Aufgabe der vorliegenden Erfindung ist es, Legierungen aus amorphen Polyaryletherketonen mit verbesserten mechanischen Eigenschaften, bereitzustellen.

Die Erfindung betrifft Polymerlegierungen enthaltend zwei Komponenten (A) und (B), dadurch gekennzeichnet, daß

(A) mindestens ein amorphes Polyaryletherketon mit einer inhärenten Viskosität von 0,2 bis 2,5 dl/g und

(B) mindestens ein vollaromatischer, flüssigkristalliner Polyester ist,

wobei der Anteil von (A) 98 bis 2 und von (B) 2 bis 98 Gew.-% bezogen auf die Summe von (A) und (B) beträgt.

Für die Legierungen gemäß der Erfindung geeignete amorphe Polyaryletherketone (A) sind aus Struktureinheiten der Formel I

[-O-X-O-Y]     (I)

aufgebaut,
wobei -X- ausgewählt ist aus den bivalenten Resten

$X^1$ 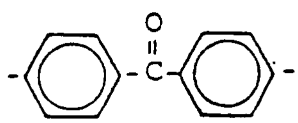

$X^2$ 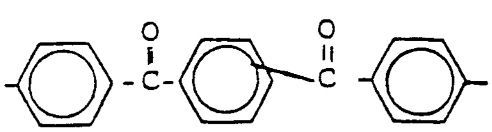 (meta- (m) oder para-(p)-Substitution)

$X^3$ 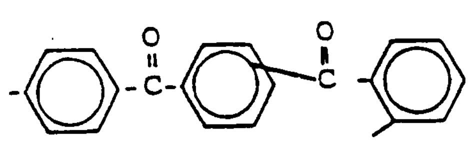 (m oder p)

und -Y- ausgewählt ist aus den Resten

$Y^1$ 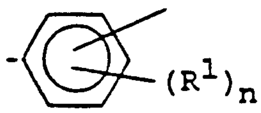

$Y^2$ 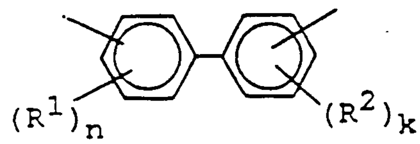

$Y^3$ 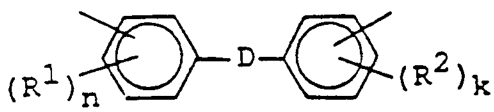

$Y^4$ 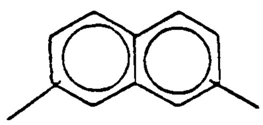

$Y^5$ 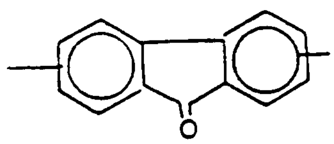

$Y^6$ 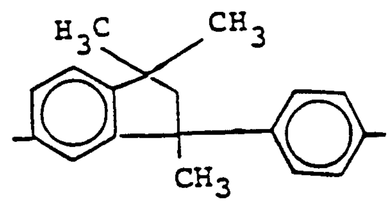

$Y^7$ 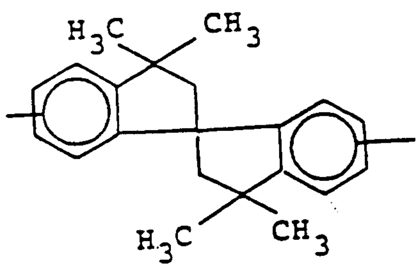

$Y^8$ 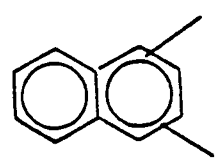

worin $R^1$ und $R^2$ gleich oder verschieden sind und Halogen, vorzugsweise Brom, $C_1$-$C_8$-Alkyl oder -Alkoxy, vorzugsweise $C_1$-$C_4$-Alkyl oder -Alkoxy, Aryl-, vorzugsweise Phenyl, oder Aryloxygruppen, vorzugsweise Phenoxy, darstellen, k und n gleich oder verschieden sind und Null oder eine ganze Zahl von 1 bis 4 bedeuten, vorzugsweise Null, 1 oder 2, insbesondere Null oder 2 und D ausgewählt ist aus den zweiwertigen Resten:

$D^1$ $-O-$, $D^2$ $>C=O$, $D^3$ $-CH_2-$,

$D^4$ $-C(CH_3)_2-$, $D^5$ $-C(CF_3)_2-$,

$D^6$ 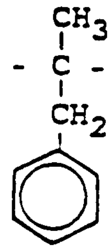 , $D^7$ 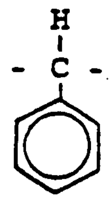 , $D^8$ 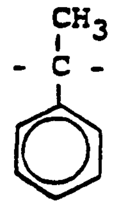

$D^9$ 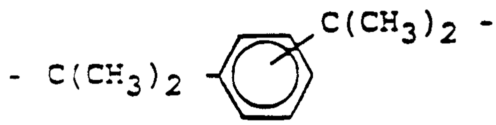 (m oder p)

$D^{10}$ 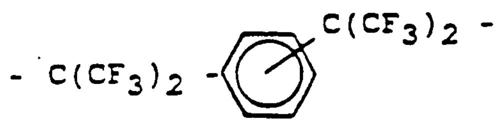 (m oder p)

Falls $R^1$ und $R^2$ in den Resten $B^2$ und $B^3$ Halogen darstellen, sind k und n vorzugsweise 2. Das molare Verhältnis der Monomeren enthaltend -X- bzw. -Y-beträgt im allgemeinen 0,95 bis 1,05 zu 1,00, vorzugsweise 1:1. Bei Polyaryletherketonen, die unter Einsatz von Indanverbindungen mit Resten $Y^6$ und $Y^7$ hergestellt worden sind, beträgt dieses molare Verhältnis im allgemeinen 1,0001 bis 1,06 zu 1, vorzugsweise 1,002 bis 1,05 zu 1 und insbesondere 1,004 bis 1,05 zu 1.

Die aufgeführten Polymeren können Homopolykondensate sein, die also nur je eine Einheit vom Typ -X- und eine Einheit vom Typ -Y- je wiederkehrender Einheit enthalten, oder Copolykondensate, welche zwei oder mehrere verschiedene Einheiten vom Typ -X- und/oder zwei oder mehrere verschiedene Einheiten vom Typ -Y- enthalten.

-X- wird bevorzugt ausgewählt aus $X^1$ und $X^2$ und besonders bevorzugt ist $X^2$. -Y-wird bevorzugt ausgewählt aus $Y^1$, $Y^2$, $Y^3$, besonders bevorzugt ist $Y^3$. -D- ist vorzugsweise $D^2$, $D^3$, $D^4$, $D^5$, $D^6$, $D^7$, $D^8$, $D^9$ und/oder $D^{10}$, die vorzugsweise in para-Stellung verknüpft sind. Besonders bevorzugt sind $D^4$, $D^5$, $D^9$ und/oder $D^{10}$.

Ist -X- ausgewählt worden aus $X^1$ und $X^2$, so stellt -Y- nicht $Y^4$ dar. Wenn -Y- gleich $Y^3$ und n gleich Null ist, wird in diesem Falle $D^1$ und $D^2$ nicht ausgewählt.

Ist in der Struktureinheit der Formel (I) -X- gleich $X^3$, so ist -Y- bevorzugt $Y^1$ oder $Y^2$ mit n gleich Null, 1 oder 2, insbesondere n gleich Null.

Handelt es sich bei den Polyaryletherketonen, deren Verwendung erfindungsgemäß beansprucht wird, nicht um Homo-, sondern um Copolykondensate, so wird -X-ebenfalls bevorzugt ausgewählt aus $X^1$ und $X^2$, besonders bevorzugt ist $X^2$. Y ist vorzugsweise $Y^1$ und/oder ein Rest ausgewählt aus $Y^2$ bis $Y^6$. Besonders bevorzugt ist die Kombination $Y^1$ und $Y^3$.

Es können auch Copolykondensate verwendet werden, die -X- als Kombination aus $X^2$ und $X^3$ enthalten. Bevorzugte Copolykondensate enthalten eine Kombination aus $X^2$ und $X^3$, wobei -Y- gleich $Y^1$ und n gleich Null ist.

Erfindungsgemäß können in den Legierungen auch lineare aromatische Polyaryletherketone, die aus mindestens einer der Struktureinheiten (IX) aufgebaut sind und deren Rest-Y- mindestens ein Rest $Y^6$ und $Y^7$ darstellt, der auch zusätzlich Einheiten des Restes $Y^3$ enthalten kann, in dem -D- die Gruppe $D^4$ ist, eingesetzt werden. Derartige Polyaryletherketone besitzen eine Glastemperatur von mindestens 170 °C, vorzugsweise mindestens 185 °C.

Vorzugsweise haben die indanhaltigen Polyaryletherketone die Struktur

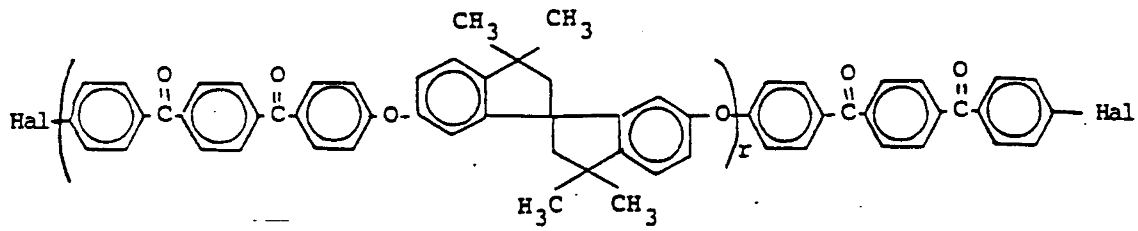

oder

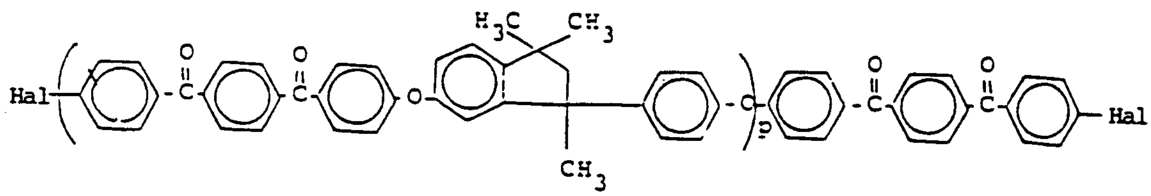

Wie erwähnt, kann neben der Indangruppierung auch eine 2,2-Biphenylpropan-Gruppevorhanden sein. Die Indices r und p haben im allgemeinen Werte über 10, wobei sich die Molekulargewichte aus den Monomerverhältnissen ergeben und sich in den inhärenten Viskositäten der Polymeren ausdrücken. Bedingt durch den geringen Überschuß der eingesetzten Dihalogenverbindungen weisen die Polyaryletherketone Halogenatome (Hal), im allgemeinen Chlor und vorzugsweise Fluor, an den Kettenenden auf.

Neben der Verwendung eines Homo- oder eines Copolykondensates können auch Polymermischungen eingesetzt werden, bestehend aus zwei oder mehreren der oben erwähnten Homopolykondensate, aus einem oder mehreren der erwähnten Homopolykondensate und einem oder mehreren der erwähnten Copolykondensate oder aus zwei oder mehreren der erwähnten Copolykondensate.

Polyaryletherketone (A) lassen sich nach bekannten Methoden herstellen z.B. durch eine elektrophile Polykondensationsreaktion (Friedel-Crafts-Reaktion) von mehrkernigen aromatischen Säurehalogeniden (wobei mindestens ein Arylrest elektronenliefernde Substituenten tragen muß), beispielsweise eines Phenoxyarylsäurechlorids, oder durch Kondensation eines Dicarbonsäurehalogenids mit einem elektronenreichen Aromaten, beispielsweise einem Diarylläther (US-A-3956240).

Eine andere Synthesemöglichkeit ist die nukleophile Polykondensation (nukleophile Substitutionsreaktion) von Halogenphenolen, wobei die Halogengruppe durch ortho- oder paraständige elektronegative Substituenten aktiviert ist, oder von zweiwertigen, ein- oder mehrkernigen Phenolen mit aktivierten Dihalogenaromaten. Bei der nukleophilen Polykondensation ist das aus dem Phenol durch Einwirken von Alkalien gebildete Phenolat das eigentliche Agens (DE-B-1545106 und CA-A-847963).
Die Herstellung der Polyaryletherketone (A) wird beispielsweise auch in High Performance Polymers, Vol.I (1), 41 ff (1989) und in Polymer 29, 358 ff (1988) beschrieben.

Die inhärente Viskosität der Polyaryletherketone (A) bestimmt nach DIN 51562, als Maß für ihr Molekulargewicht, gemessen in einer Lösung von 0,1 g des Polymeren in 100 ml Chloroform bei 25 °C, liegt bevorzugt bei 0,4-1,5 dl/g. Die indanhaltigen Polyaryletherketone haben eine Viskosität von mindestens 0,30 dl/g. Die Polyaryletherketone (A) haben einen MFI (melt flow index) von 4-100 g/10 min, bevorzugt 8-80 g/10 min und besonders bevorzugt von 15-80 g/10 min, gemäß DIN 53735-MFI-B (Stempellast 5 kp) bei einer Aufschmelzzeit von 5 Minuten bei 270 °C.

Für die Legierungen gemäß der Erfindung geeignete, vollaromatische, flüssigkristalline Polyester (B) besitzen anisotrope Schmelzen und weisen mittlere Molekulargewichte (Gewichtsmittel) zwischen 2000 und 200000, bevorzugt zwischen 3500 und 50000 und besonders bevorzugt zwischen 4000 und 30000 g/mol auf.

Eine für die Legierungen gemäß der Erfindung bevorzugte Klasse flüssigkristalliner Polymere ist beschrieben in US-A-4 161 470. Diese Polymere sind Naphthoyl-Copolyester mit Struktureinheiten der Formeln II und III

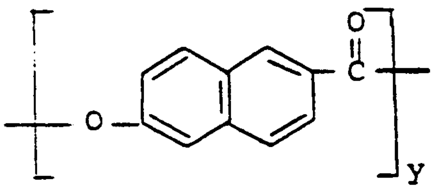

(II)

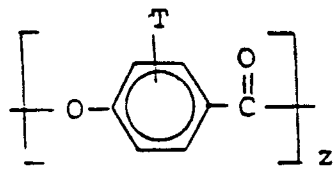

(III)

worin y und z ganze Zahlen größer als 1 bedeuten, T ausgewählt ist aus Wasserstoff, einem Alkylrest mit 1 bis 4 Kohlenstoffatomen, einem Alkoxyrest mit 1 bis 4 Kohlenstoffatomen oder einem Halogen, wobei die Struktureinheiten der Formel III unabhängig voneinander gleiche oder verschiedene Reste T enthalten können. Die Copolyester enthalten 10 bis 90 Molprozent Struktureinheiten der Formel II und 90 bis 10 Molprozent Struktureinheiten der Formel III, wobei sich die Anteile der Struktureinheiten der Formel II und III auf 100 Mol-% ergänzen. Ein bevorzugter Copolyester enthält 25 bis 45 Molprozent Struktureinheiten der Formel II und 75 bis 55 Molprozent Struktureinheiten der Formel III.

Weitere für die Legierungen gemäß der Erfindung bevorzugte flüssigkristalline Polyester sind beschrieben in EP-A-0 278 066 und US-A-3 637 595. Diese Oxybenzoylcopolyester enthalten Struktureinheiten der Formeln IV, V und VI in unterschiedlichen Molverhältnissen:

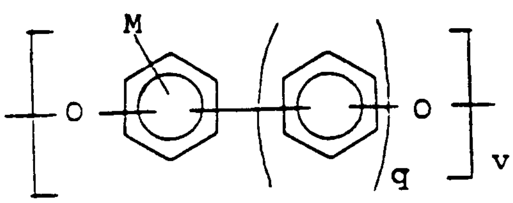

(IV)

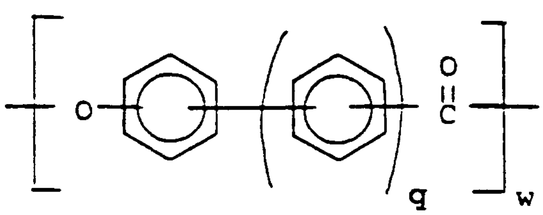

(V)

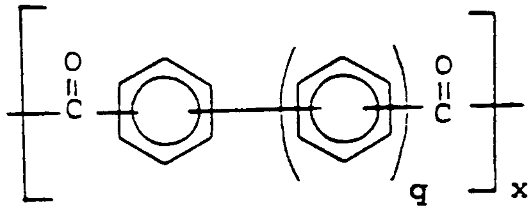

(VI)

wobei q Null oder 1 ist, v, w und x ganze Zahlen größer als 1 sind, M ausgewählt ist aus Wasserstoff, einem Alkylrest mit 1 bis 4 Kohlenstoffatomen, einem Arylrest mit 6 bis 10 Kohlenstoffatomen, einem Alkylarylrest mit 6 bis 10 Kohlenstoffatomen oder einem Halogen, wobei die Struktureinheiten der Formel IV unabhängig voneinander gleiche oder verschiedene Reste M enthalten können. Die Summe von v, w und x beträgt bevorzugt Werte von 30 bis 600. Die Oxybenzoylcopolyester enthalten 0,6 bis 60 Molprozent

Struktureinheiten der Formel IV, 0,4 bis 98,5 Molprozent Struktureinheiten der Formel V und 1 bis 60 Molprozent Struktureinheiten der Formel VI, wobei sich die Anteile der Struktureinheiten der Formeln IV, V und VI auf 100 Molprozent ergänzen. Bevorzugte Oxybenzoylcopolyester enthalten 8 bis 48 Molprozent Struktureinheiten der Formel IV, 5 bis 85 Molprozent Struktureinheiten der Formel V und 8 bis 48 Molprozent Struktureinheiten der Formel VI.

Für die Legierungen gemäß der Erfindung sind ebenfalls Copolyester geeignet, die nur Struktureinheiten der Formeln IV und VI enthalten. Diese flüssigkristallinen Polymere enthalten bevorzugt 40 bis 60 Molprozent Struktureinheiten der Formel IV und 60 bis 40 Molprozent Struktureinheiten der Formel VI. Besonders bevorzugt ist ein Molverhältnis von 1 zu 1 der Struktureinheiten IV und VI. Solche Polyester werden beispielsweise beschrieben in US-A-4 600 765; US-A-4 614 790 und US-A-4 614 791. Weitere bevorzugte Copolyester enthalten eine oder mehrere der Struktureinheiten der Formeln II bis VI und zusätzlich mindestens eine Struktureinheit der Formel VII

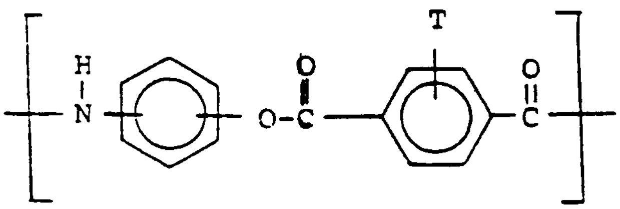

VII

worin T die obengenannte Bedeutung besitzt.

Die Herstellung der flüssigkristallinen Polyester (B) wird beispielsweise in US-A-3637595 und US-A-4161470 beschrieben.

Der Anteil an amorphen Polyaryletherketonen (A) in den erfindungsgemäßen Legierungen beträgt bevorzugt 98 bis 50 Gew.-% und besonders bevorzugt 95 bis 70 Gew.-%. Der Anteil an flüssigkristallinen Polyestern (B) in den erfindungsgemäßen Legierungen beträgt bevorzugt 2 bis 50 Gew.-% und besonders bevorzugt 5 bis 30 Gew.-%, wobei sich die Anteile von (A) und (B) relativ in Bezug auf die Gesamtlegierung auf 100 Gew.-% ergänzen. Die erfindungsgemäßen Legierungen können ein oder mehrere amorphe Polyaryletherketone und einen oder mehrere flüssigkristalline Polyester enthalten.

Die erfindungsgemäßen Legierungen werden durch für Thermoplasten bekannte Standardmethoden hergestellt und verarbeitet, wie z.B. durch Extrusion oder Spritzguß.

Die erfindungsgemäßen Legierungen können Additive enthalten, beispielsweise Plastifizierer, thermische Stabilisatoren, UV-Stabilisatoren, Schlagzähmodifizierer oder verstärkende Zusätze wie Glas-, Kohle- oder Hochmodulfasern.

Die Legierungen können insbesondere vorteilhaft als Matrixmaterialien für Verbundwerkstoffe eingesetzt werden. Sie eignen sich außerdem zur Herstellung von Formkörpern nach dem Spritzguß- oder Extrusionsverfahren, beispielsweise in Form von Fasern, Folien und Schläuchen.

Es wurden folgende Polymere nach Standardmethoden hergestellt:
Polyaryletherketon A1 (PEK A1) mit Struktureinheiten der Formel

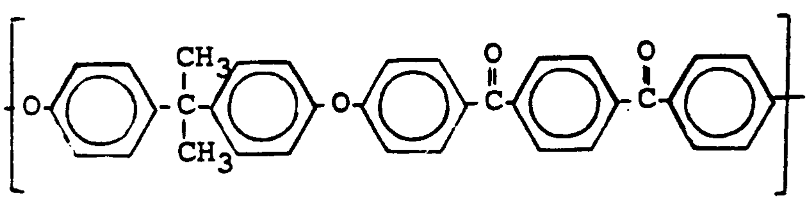

dessen inhärente Viskosität 0,4 dl/g, gemessen in Chloroform bei 25 °C, beträgt.

Polyaryletherketon A2 (PEK A2) mit Struktureinheiten a und b der Formel

a b

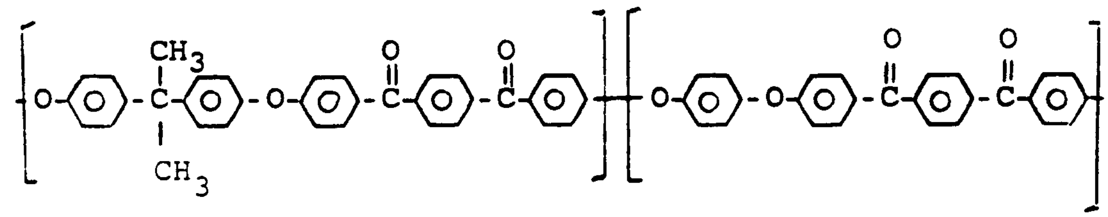

worin der Anteil der Struktureinheiten a 70 Mol-% und der Struktureinheiten b 30 Mol-% und die inhärente Viskosität 0,4 dl/g, gemessen in Dimethylformamid bei 25 ° C, beträgt.

Flüssigkristalline Copolyester B1 (LCPE B1) mit Struktureinheiten der Formel

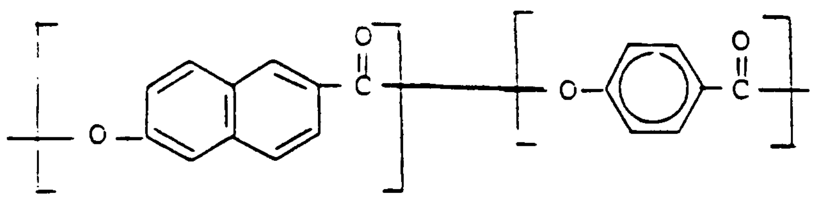

worin der Anteil der Oxynaphthoylstruktureinheiten 30 Mol-% und der Oxybenzoylstruktureinheiten 70 Mol-% beträgt.

Flüssigkristalline Copolyesteramide B2 (LCPE B2) mit Struktureinheiten der Formel:

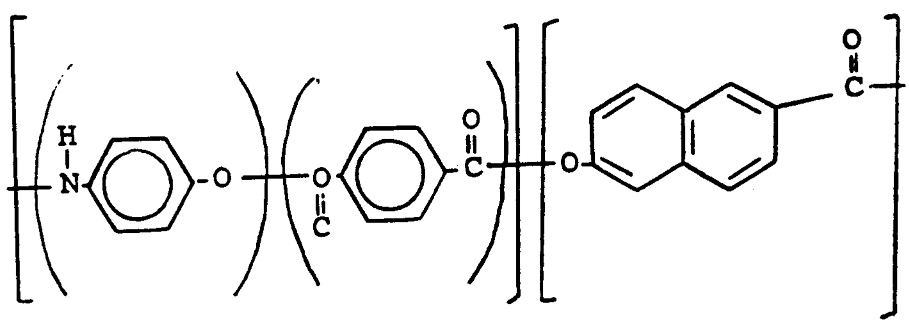

worin der Anteil der Struktureinheiten von Oxynaphthoyl 58 Mol-%, von Terephthaloyl 21 Mol-% und von Aminophenoxy 21 Mol-% beträgt.

Derartige flüssigkristalline Copolyester B1 und B2 können kommerziell erworben werden. B1 wird beispielsweise als ®Vectra A950 und B2 als Vectra B950 (® = eingetragenes Warenzeichen) von der Fa. Hoechst AG, Frankfurt am Main vertrieben.

Die oben beschriebenen Polymere wurden zunächst getrocknet (140 ° C, 24 Stunden, Vakuum) und anschließend in verschiedenen Gewichtsverhältnissen in einem Meßextruder (HAAKE, Rheocord System 90 / Rheomex TW 100) unter Schutzgas (Argon) extrudiert.

Die erhaltenen Legierungen wurden getrocknet (140 ° C, 24 Stunden, Vakuum) und anschließend entweder zu Formteilen wie Schulterstäben oder Schlagstäben (6 * 4 * 50 mm) spritzgegossen (Spritzgußmaschine DEMAG Stübbe S55d) oder auf ihre physikalischen Eigenschaften hin untersucht. Dazu wurden folgende Geräte verwendet:

Ein Göttfert - Schmelzindex - Prüfgerät MPS - D zur Messung von Fließfähigkeiten der Legierungen.

Ein instrumentiertes Zwick-Schlagpendel zur Ermittlung von Schlagzähigkeiten (gekerbt).

Eine Zug-Dehnungs-Prüfmaschine der Firma Instron, Offenbach.

Beispiel 1

Mittels des Zweischneckenextruders wurden das Polyaryletherketon A1 und der flüssigkristalline Copolyester B1 in verschiedenen Gewichtsverhältnissen nach intensiver Trocknung gemeinsam unter Argonatmosphäre extrudiert und granuliert. Die Granulate wurden anschließend nach intensiver Trocknung zu Schlagstäben und Schulterstäben spritzgegossen. Nachstehende Tabelle zeigt die ermittelten mechanischen Eigenschaften der Legierungen.

| PEK A1 (Gew.-%) | LCPE B1 (Gew.-%) | Elastizitätsmodul (GPa) | Schlagarbeit (mJ) | Reißdehnung (%) |
|---|---|---|---|---|
| 100 | 0 | 2,1 | 60 | 85 |
| 95 | 5 | 2,3 | 90 | 85 |
| 90 | 10 | 2,5 | 140 | 20 |
| 80 | 20 | 3,3 | 100 | 10 |

Beispiel 2

Mittels Zweischneckenextruders wurden PEK A1 und LCPE B2 in verschiedenen Gewichtsverhältnissen nach intensiver Trocknung gemeinsam unter Argonatmosphäre extrudiert und granuliert. Die Granulate wurden anschließend nach intensiver Trocknung zur Messung der Fließfähigkeiten der Legierungen verwendet.

| PEK A1 (Gew.-%) | LCPE B2 (Gew.-%) | MFI 5 kp 300 ° C [g/10 min] |
|---|---|---|
| 100,0 | 0 | 34 |
| 95,0 | 5,0 | 35 |
| 90,0 | 10,0 | 36 |
| 87,5 | 12,5 | 39 |
| 85,0 | 15,0 | 45 |

Beispiel 3

Mittels des Zweischneckenextruders wurden PEK A2 und LCPE B1 in verschiedenen Gewichtsverhältnissen nach intensiver Trocknung gemeinsam unter Argonatmosphäre extrudiert und granuliert. Die Granulate wurden anschließend nach intensiver Trocknung zu Schlagstäben und Schulterstäben spritzgegossen. Zur Bestimmung der Wasseraufnahme wurden die intensiv getrockneten Granulate 200 h bei 23 ° C und 85 % relativer Feuchtigkeit gelagert. Nachstehende Tabelle zeigt die ermittelten mechanischen Eigenschaften und die Wasseraufnahme der Legierungen.

| PEK A2 (Gew.-%) | LCPE B1 (Gew.-%) | Elastizitätsmodul (GPa) | Schlagarbeit (mJ) | Wasseraufnahme (Gew.-%) |
|---|---|---|---|---|
| 100 | 0 | 2,2 | 60 | 0,4 |
| 90 | 10 | 2,4 | 130 | 0,4 |
| 80 | 20 | 3,4 | 95 | 0,3 |

**Patentansprüche**

**1.** Polymerlegierung enthaltend zwei Komponenten (A) und (B), dadurch gekennzeichnet, daß
(A) mindestens ein amorphes Polyaryletherketon mit einer inhärenten Viskosität von 0,2 bis 2,5 dl/g und
(B) mindestens ein vollaromatischer, flüssigkristalliner Polyester ist,
wobei der Anteil von (A) 98 bis 2 und von (B) 2 bis 98 Gew.-% bezogen auf die Summe von A und B beträgt.

**2.** Polymerlegierung nach Anspruch 1, dadurch gekennzeichnet, daß der Anteil der Polyaryletherketone (A) 98 bis 50 Gew.-% und der Anteil der flüssigkristallinen Polyester (B) 2 bis 50 Gew.-% beträgt.

3. Polymerlegierung nach Anspruch 2, dadurch gekennzeichnet, daß der Anteil der Polyaryletherketone (A) 95 bis 70 Gew.-% und der Anteil der flüssigkristallinen Polyester (B) 5 bis 30 Gew.-% beträgt.

4. Polymerlegierung nach Anspruch 1, dadurch gekennzeichnet, daß das amorphe Polyaryletherketon (A) aus Struktureinheiten der Formel I [-O-X-O-Y] (I) aufgebaut ist,

wobei -X- ausgewählt ist aus den bivalenten Resten

$X^1$ 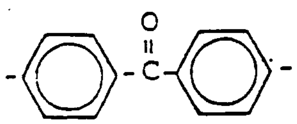

$X^2$ 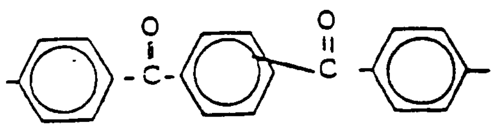 (meta- (m) oder para-(p)-Substitution)

$X^3$ 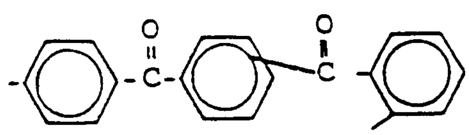 (m oder p)

und -Y- ausgewählt ist aus den Resten

$Y^1$ 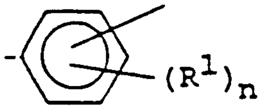

$Y^2$ 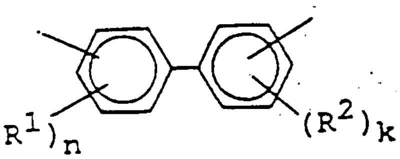

$Y^3$ 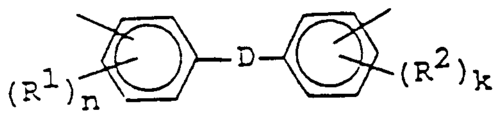

$Y^4$ 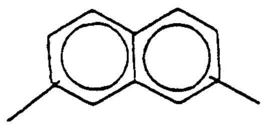

$Y^5$ 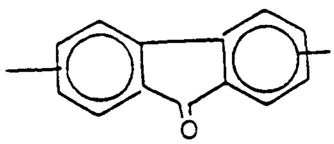

$Y^6$ 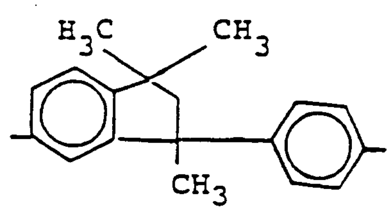

$Y^7$ 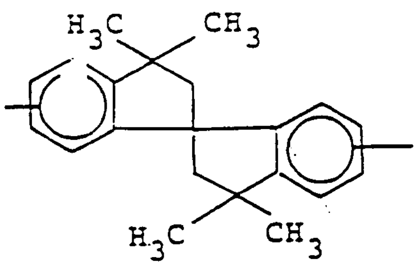

$Y^8$ 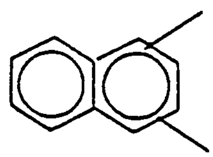

worin $R^1$ und $R^2$ gleich oder verschieden sind und Halogen, $C_1$-$C_8$-Alkyl oder -Alkoxy, Aryl-, oder Aryloxygruppen darstellen, k und n gleich oder verschieden sind und Null oder eine ganze Zahl von 1 bis 4 bedeuten und D ausgewählt ist aus den zweiwertigen Resten:

$D^1$ $-O-$ , $D^2$ $>C=O$, $D^3$ $-CH_2-$,

$D^4$ $-C(CH_3)_2-$, $D^5$ $-C(CF_3)_2-$ ,

$D^6$ 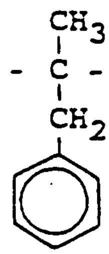 , $D^7$ 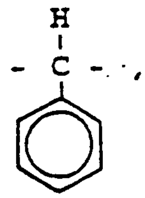 , $D^8$ 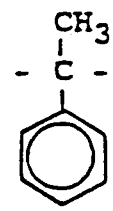

$D^9$ 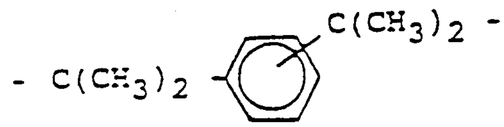 (m oder p)

$D^{10}$ 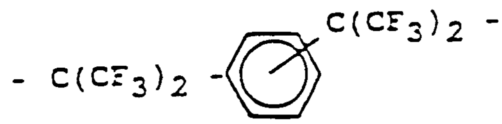 (m oder p)

5. Polymerlegierung nach Anspruch 4, dadurch gekennzeichnet, daß -X-ausgewählt ist aus $X^1$ und $X^2$ -Y- gleich $Y^1$ und/oder ein Rest ausgewählt aus $Y^2$ bis $Y^8$ ist und -D- $D^4$, $D^5$, $D^9$ und/oder $D^{10}$ ist.

6. Polymerlegierung nach Anspruch 5, dadurch gekennzeichnet, daß das Polyaryletherketon (A) Struktureinheiten folgender Formel aufweist:

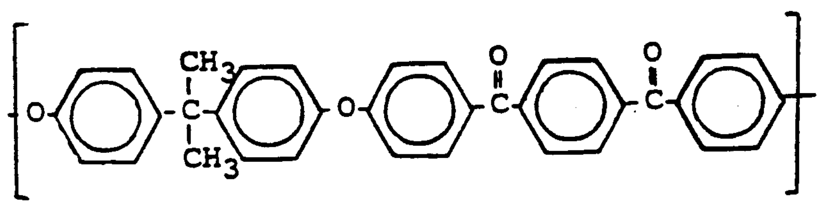

und insbesondere

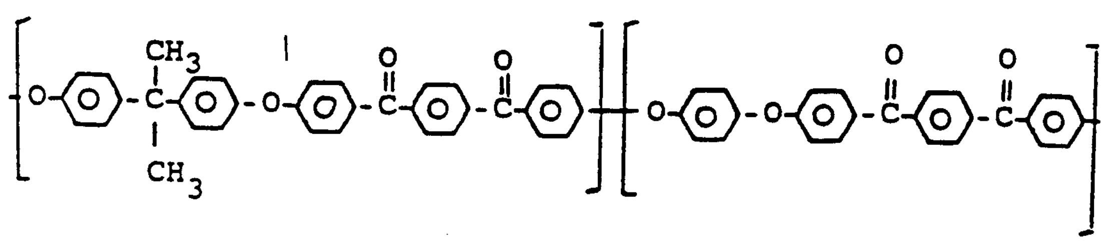

7. Polymerlegierung nach Anspruch 1, dadurch gekennzeichnet, daß der Polyester (B) ein Copolyester ist, enthaltend Struktureinheiten der Formeln II und III

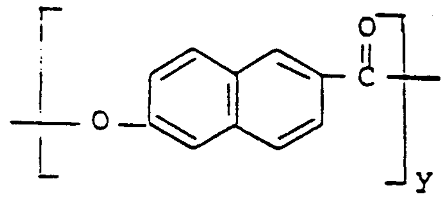

(II)

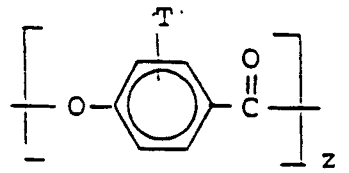

(III)

worin y und z ganze Zahlen größer als 1 bedeuten, T ausgewählt ist aus Wasserstoff, einem Alkylrest mit 1 bis 4 Kohlenstoffatomen, einem Alkoxyrest mit 1 bis 4 Kohlenstoffatomen oder einem Halogen, wobei die Struktureinheiten der Formel III unabhängig voneinander gleiche oder verschiedene Reste T enthalten können.

8. Polymerlegierung nach Anspruch 1, dadurch gekennzeichnet, daß der Polyester (B) ein Copolyester ist, enthaltend Struktureinheiten der Formeln IV, V und VI

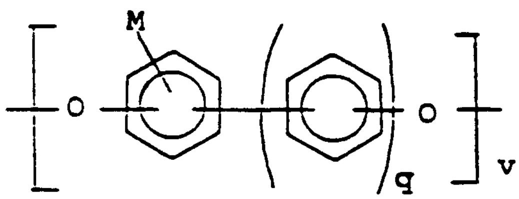

(IV)

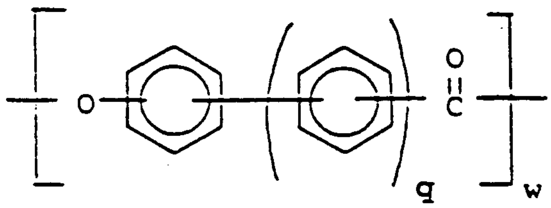

(V)

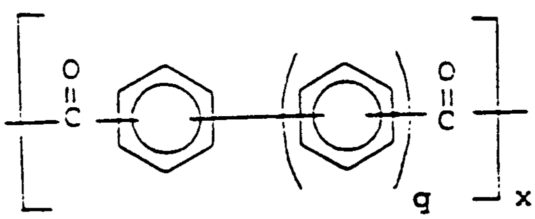

(VI)

wobei q Null oder 1 ist, v, w und x ganze Zahlen größer als 1 sind, M ausgewählt ist aus Wasserstoff, einem Alkylrest mit 1 bis 4 Kohlenstoffatomen, einem Arylrest mit 6 bis 10 Kohlenstoffatomen, einem Alkylarylrest mit 6 bis 10 Kohlenstoffatomen oder einem Halogen, wobei die Struktureinheiten der Formel IV unabhängig voneinander gleiche oder verschiedene Reste M enthalten können.

9. Polymerlegierung nach Anspruch 1, dadurch gekennzeichnet, daß der Polyester (B) ein Copolyester ist, der aus den Struktureinheiten der Formeln IV und VI aufgebaut ist, wobei IV und VI die in Anspruch 8 angegebenen Bedeutung aufweisen.

**10.** Polymerlegierung nach Anspruch 1, dadurch gekennzeichnet, daß der Polyester (B) ein Copolyester ist, enthaltend eine oder mehrere Struktureinheiten der Formeln II bis VI

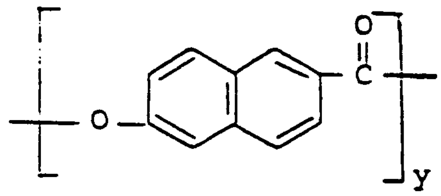

(II)

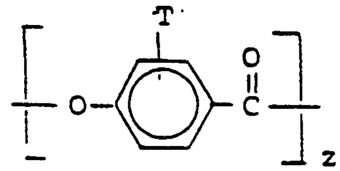

(III)

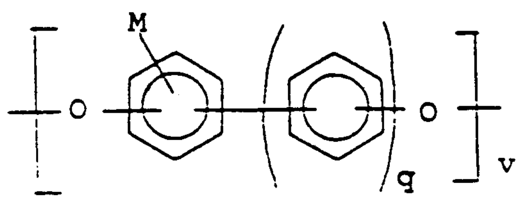

(IV)

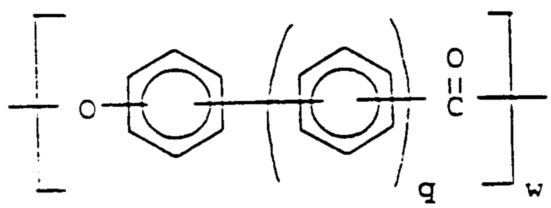

(V)

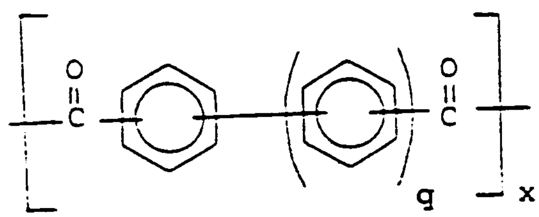

(VI)

worin v, w, x, y und z ganze Zahlen größer als 1 bedeuten, T ausgewählt ist aus Wasserstoff, einem Alkylrest mit 1 bis 4 Kohlenstoffatomen, einem Alkoxyrest mit 1 bis 4 Kohlenstoffatomen oder einem Halogen, q Null oder 1 ist, M ausgewählt ist aus Wasserstoff, einem Alkylrest mit 1 bis 4 Kohlenstoffatomen, einem Arylrest mit 6 bis 10 Kohlenstoffatomen, einem Alkylarylrest mit 6 bis 10 Kohlenstoffatomen oder einem Halogen, wobei die Struktureinheiten der Formel III unabhängig voneinander gleiche oder verschiedene Reste T und die Struktureinheiten der Formel IV unabhängig voneinander gleiche oder verschiedene Reste M enthalten können, und zusätzlich enthaltend mindestens eine Struktureinheit der Formel VII

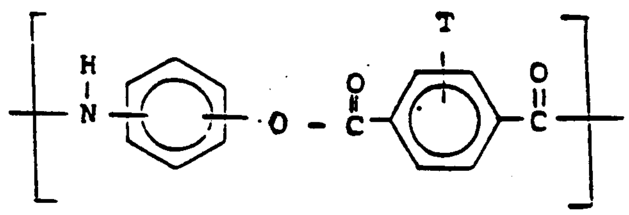

(VII)

worin T die obengenannte Bedeutung besitzt.

**11.** Legierung nach Anspruch 10, dadurch gekennzeichnet, daß der Polyester (B) Struktureinheiten der Formeln

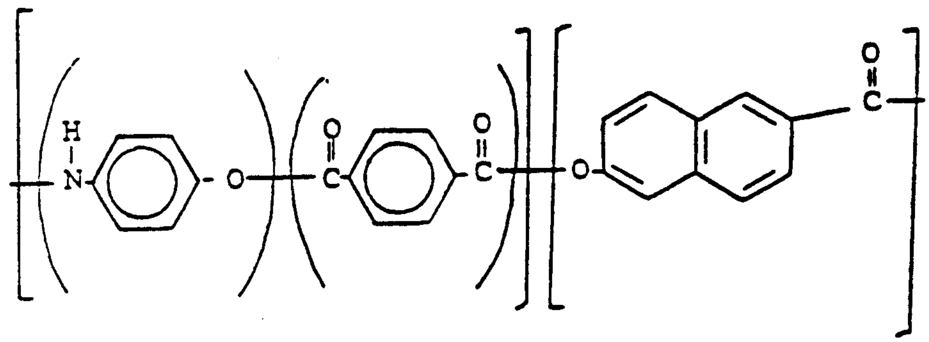

enthält.

**12.** Legierung nach Anspruch 1, dadurch gekennzeichnet, daß das Polyaryletherketon (A) Struktureinheiten der Formel

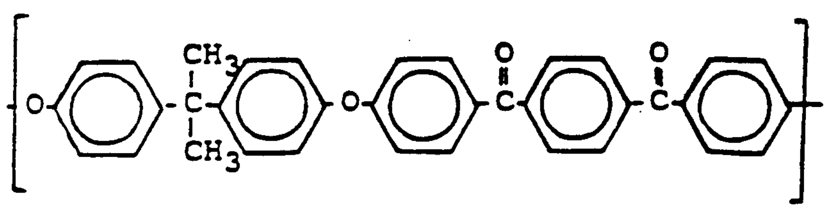

und der Polyester (B) Struktureinheiten der Formeln

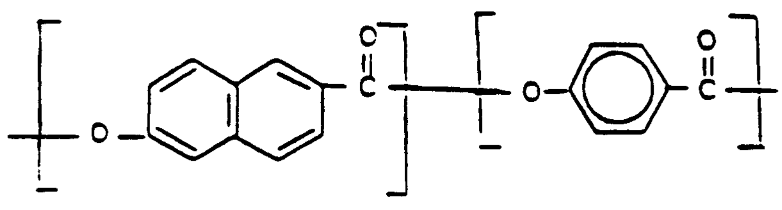

enthält.

**13.** Legierung nach Anspruch 1, dadurch gekennzeichnet, daß das Polyaryletherketon (A) Struktureinheiten der Formel

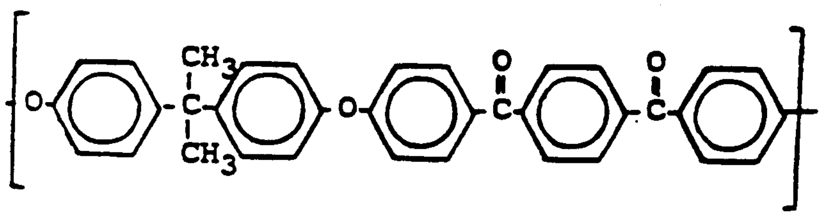

und der Polyester (B) Struktureinheiten der Formeln

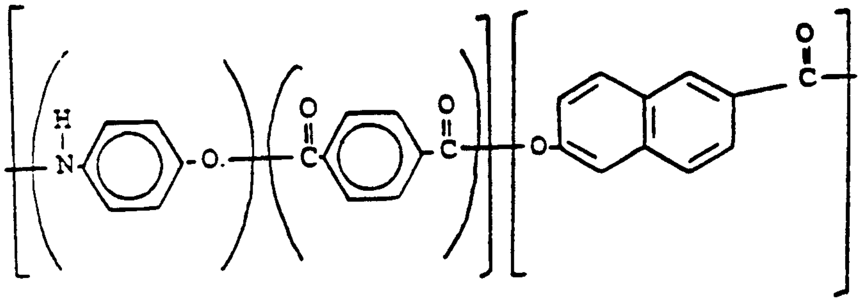

enthält.

**14.** Legierung nach Anspruch 1, dadurch gekennzeichnet, daß das Polyaryletherketon (A) Struktureinheiten der Formeln

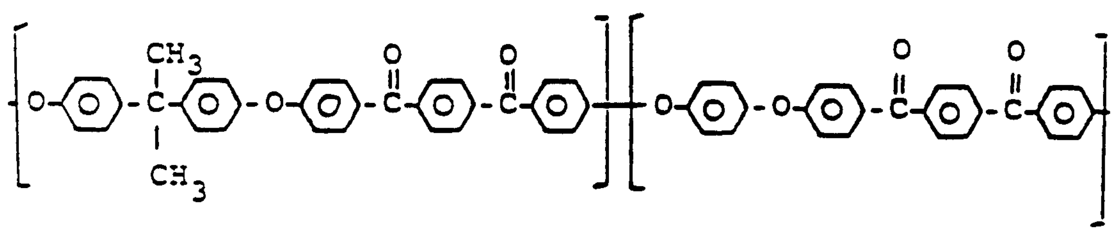

und der Polyester (B) Struktureinheiten der Formeln

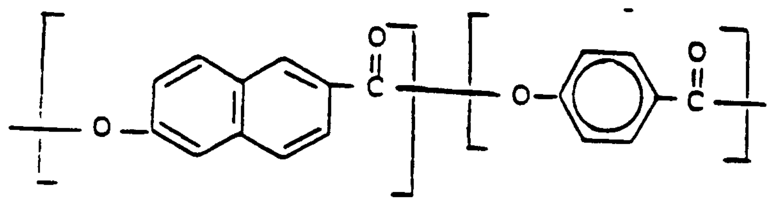

enthält.

**15.** Verwendung einer Legierung nach Anspruch 1 als Matrixmaterial für Verbundwerkstoffe oder zur Herstellung von Formkörpern.